(19) Europäisches Patentamt
European Patent Office
Office européen des brevets

(11) **EP 2 443 787 B1**

(12) **FASCICULE DE BREVET EUROPEEN**

(45) Date de publication et mention
de la délivrance du brevet:
**02.10.2013 Bulletin 2013/40**

(21) Numéro de dépôt: **10738013.1**

(22) Date de dépôt: **15.06.2010**

(51) Int Cl.:
*G06F 7/72* (2006.01)          *H04L 9/28* (2006.01)
*G06F 7/58* (2006.01)          *G06F 17/10* (2006.01)

(86) Numéro de dépôt international:
**PCT/FR2010/051190**

(87) Numéro de publication internationale:
**WO 2010/146302 (23.12.2010 Gazette 2010/51)**

(54) **Cryptographie sur une courbe elliptique**

Kryptografie auf einer elliptischen Kurve

Cryptography on a elliptical curve

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **16.06.2009 FR 0954053**

(43) Date de publication de la demande:
**25.04.2012 Bulletin 2012/17**

(73) Titulaire: **MORPHO
92130 Issy Les Moulineaux (FR)**

(72) Inventeurs:
• **ICART, Thomas
F-75015 Paris (FR)**
• **CORON, Jean-Sébastien
F-92600 Asnieres (FR)**

(74) Mandataire: **Cabinet Plasseraud
52, rue de la Victoire
75440 Paris Cedex 09 (FR)**

(56) Documents cités:
**WO-A-00/05837**

• **SHALLUE A ET AL: "Construction of rational
points on elliptic curves over finite fields", IN
COMPUTER SCIENCE VOL.4076) SPRINGER-
VERLAG BERLIN, GERMANY,, 1 janvier 2006
(2006-01-01), pages 510-524, XP002563570,
Extrait de l'Internet: URL:http:
//www.springerlink.com/content/73
w83650p1077018/fulltext.pdf [extrait le
2010-01-18]**

EP 2 443 787 B1

**Description**

La présente invention concerne la cryptographie de messages basée sur l'utilisation de points d'une courbe elliptique, et plus particulièrement une telle cryptographie de manière déterministe.

Afin d'appliquer un calcul cryptographique à un message, on met classiquement en oeuvre des algorithmes d'insertion de valeurs arbitraires au sein de structures mathématiques. A cet effet, les courbes elliptiques sont des structures mathématiques qui permettent à la fois de faciliter la mise en oeuvre de tels calculs cryptographiques et de sauver de la place mémoire par rapport à la mise en oeuvre d'autres calculs cryptographiques.

Toutefois, les algorithmes efficaces d'insertion de valeurs arbitraires utilisant les courbes elliptiques sont probabilistes. Par conséquent, le temps de mise en oeuvre de tels algorithmes n'est pas constant, il est fonction du message à coder. Ainsi, si un attaquant détermine différents temps de mise en oeuvre de l'algorithme appliqué, il peut obtenir des informations sur le message codé.

Afin de masquer le temps utilisé par un algorithme d'insertion probabiliste, il est possible de prévoir d'ajouter des étapes inutiles dans cet algorithme afin que son application s'étale toujours sur une période de temps de longueur identique, quel que soit le message traité.

Un point P d'une courbe elliptique est défini par son abscisse X et son ordonnée Y, X et Y vérifiant l'équation suivante :

$$f(X)=Y^2 \qquad\qquad (1)$$

où $f(X)$ est le polynôme $f(X) = X^3 + aX + b$

On connait une famille de polynômes, vérifiant l'égalité de Skalba qui permet de déterminer un tel point d'une courbe elliptique, telle que définie dans le document 'Construction of Rational Points on Elliptic Curves over finite fields' de Andrew Shallue et Christiaan van de Woestijne.

Des polynômes $X_1(t)$, $X_2(t)$, $X_3(t)$ et $U(t)$ vérifient l'égalité de Skalba s'ils vérifient l'équation suivante :

$$f(X_1(t)).f(X_2(t)).f(X_3(t))=U^2(t) \qquad\qquad (2)$$

où $f$ est la fonction qui définit la courbe elliptique considérée, et
où $t$ est un paramètre.

Les polynômes vérifiant l'égalité de Skalba peuvent prendre deux paramètres $u$ et $t$. Dans ce cas, l'égalité de Skalba s'écrit :

$$f(X_1(t,u)).f(X_2(t,u)).f(X_3(t,u))=U^2(t,u)$$

On peut utiliser ce type d'équations avec deux paramètres $u$ et $t$. Toutefois, dans les applications visées, on peut avantageusement prévoir de fixer $u$, ou encore de fixer $t$, à une valeur quelconque. Ainsi, la valeur d'un seul paramètre reste à choisir.

Etant donné des paramètres choisis $t$ et $u$, on note $X_1= X_1(t,u)$, $X_2= X_2(t,u)$, $X_3= X_3(t,u)$, $U= U(t,u)$, où $X_1$, $X_2$, $X_3$ et $U$ sont des éléments de Fq. Cette équation (2) signifie que l'une au moins parmi les valeurs $f(X_1)$, $f(X_2)$ et $f(X_3)$ correspond à un terme au carré dans le corps fini Fq,

Puis, une fois que le terme au carré dans Fq, $f(X_i)$, est identifié, on peut ensuite obtenir un point de la courbe elliptique $P(X_i,\sqrt{f(X_i)})$.

Le calcul de $\sqrt{f(X_i)}$ peut se faire à l'aide d'un calcul d'exponentiation lorsque la caractéristique $q$ du corps Fq vérifie :
$q = 3 \bmod 4$

Dans ce cas, il est connu que :

$$\sqrt{f(X_i)} = f(X_i)^{(q+1)/4} \qquad\qquad (3)$$

Pour déterminer un point de la courbe elliptique (1), il convient donc de déterminer quelle valeur parmi les trois valeurs $f(X_1)$, $f(X_2)$ et $f(X_3)$ correspond à un terme au carré dans le corps fini Fq. On pourrait à cet effet prévoir de contrôler en premier lieu si le terme $f(X_1)$ est un terme au carré dans le corps fini Fq, puis, si tel n'est pas le cas, appliquer ce même contrôle au terme $f(X_2)$, et enfin si ce n'est toujours pas le cas contrôler le terme $f(X_3)$ de manière similaire. Toutefois, en procédant ainsi, la détermination d'un point sur la courbe elliptique ne consomme pas toujours le même temps, puisque cette détermination est plus rapidement effectuée si le premier terme contrôlé est un terme au carré que si le troisième terme seulement est un terme au carré.

Un potentiel attaquant pourrait tirer partie de cette différence de temps passé à déterminer un point sur la courbe elliptique pour violer le secret lié au paramètre ayant permis de générer ce point. Or, dans le domaine de la cryptographie, ces paramètres doivent rester secrets.

Ces paramètres peuvent notamment correspondre à des mots de passe. Ainsi, il est important que la détermination de ces points ne fournisse pas en elle-même des informations permettant de violer le secret du paramètre, et de ce fait, des attaques basées sur une analyse du temps passé à déterminer un point de la courbe sont à éviter.

Pour pallier ce désavantage, il serait possible de contrôler systématiquement les trois termes $f(X_i)$ pour i allant de 1 à 3. Ainsi, le temps pour déterminer un point de la courbe ne serait plus fonction du point déterminé.

Mais, le fait de contrôler si un terme de l'équation (2) est un terme au carré dans le corps fini Fq est une opération complexe mettant notamment en oeuvre une exponentiation qui est coûteuse en temps d'exécution. Dans le cas où l'on souhaite déterminer un point d'une courbe elliptique sur la base des égalités de Skalba, tout en effectuant ces déterminations à temps constant, quatre opérations d'exponentiation sont requises dans le cas décrit ci-dessus, une exponentiation par contrôle de chacun des termes de l'équation (2) de Skalba et une exponentiation pour calculer la racine carrée, tel que décrit dans l'équation (3) .

La présente invention vise à améliorer la situation.

Un premier aspect de la présente invention propose un procédé d'exécution d'un calcul cryptographique dans un composant électronique comprenant une étape d'obtention d'un point P(X,Y) à partir d'au moins un paramètre t, sur une courbe elliptique vérifiant l'équation :

$$Y^2 = f(X) \ ;$$

et
à partir de polynômes $X_1(t)$, $X_2(t)$, $X_3(t)$ et $U(t)$ vérifiant l'égalité de Skalba suivante :

$$f(X_1(t)).f(X_2(t)).f(X_3(t)) = U(t)^2$$

dans le corps fini Fq, quel que soit le paramètre t, q vérifiant l'équation q = 3 mod 4;
ledit procédé comprenant les étapes suivantes :

/1/ obtenir une valeur du paramètre t ;
/2/ déterminer le point P en effectuant les sous étapes suivantes :

/i/ calculer $X_1 = X_1(t)$, $X_2 = X_2(t)$, $X_3 = X_3(t)$ et $U = U(t)$
/ii/ si le terme $f(X_1).f(X_2)$ est un terme au carré dans le corps fini Fq alors tester si le terme $f(X_3)$ est un terme au carré dans le corps fini Fq et calculer la racine carré du terme $f(X_3)$, le point P ayant pour abscisse $X_3$ et pour ordonnée la racine carré du terme $f(X_3)$ ;
/iii/ sinon tester si le terme $f(X_1)$ est un terme au carré dans le corps fini Fq et dans ce cas, calculer la racine carré du terme $f(X_1)$, le point P ayant pour abscisse $X_1$ et pour ordonnée la racine carré du terme $f(X_1)$ ;
/iv/ sinon calculer la racine carré du terme $f(X_2)$, le point P ayant pour abscisse $X_2$ et pour ordonnée la racine carré du terme $f(X_2)$ ;

/3/ utiliser ledit point P dans une application cryptographique de chiffrement ou de hachage ou de signature ou d'authentification ou d'identification.

Grâce à ces dispositions, on peut déterminer un point d'une courbe elliptique de manière adaptée à une utilisation dans le domaine de la cryptographie, puisque d'une part, cette détermination consomme le même temps quel que soit le paramètre d'entrée t et d'autre part, elle est efficace car le nombre d'opérations lourdes est réduit.

Cette détermination consomme un temps constant qui n'est pas dépendant du ou des paramètres d'entrée. En effet, même si ce procédé offre différentes voix de traitement en fonction du terme qui correspond à un terme au carré dans l'égalité de Skalba, le même nombre d'opérations de même type est effectué quel que soit le point de la courbe déterminé. De manière plus précise, quelque soit le point de la courbe déterminé, on effectue la liste des opérations suivantes :

- test d'un terme au carré dans $F_q$ ;
- détermination d'une racine carrée.

Il n'est donc pas possible de procéder à une attaque de type 'timing attack'.

En outre, cette détermination est efficace puisque le nombre des opérations coûteuses mises en oeuvre est limité. En effet, il est possible de contrôler le fait qu'un parmi les trois termes de l'équation de Skalba (2) est un terme au carré dans le corps fini Fq, en mettant en oeuvre au maximum deux opérations de type exponentiation. Plus précisément, il convient de noter que, dans un mode de réalisation de la présente invention, le test d'un terme au carré correspond à une exponentiation, qui est l'opération la plus lourde à mettre en oeuvre dans le présent contexte.

A l'étape /2/-/ii/, il est prévu de décider si le terme $R_0$ :

$$R_0 = f(X_1).f(X_2)$$

est un terme au carré.

Cette étape peut correspondre à un test de terme au carré, qui met en oeuvre une exponentiation supplémentaire, ou encore elle peut être basée sur une valeur pré-calculée issue d'un calcul préalable dans le cas où un polynôme vérifiant l'égalité de Skalba correspond à un terme qui ne peut jamais être un terme au carré. Dans ce dernier cas, exposé dans des sections suivantes, la mise en oeuvre d'un procédé requiert avantageusement une seule exponentiation. Mais dans le pire cas, la mise en oeuvre d'un procédé selon un mode de réalisation de la présente invention correspond à deux exponentiations, une pour le test de terme au carré appliqué à $R_0$, et une autre exponentiation pour le test de terme au carré appliqué soit à $f(X_3)$ soit encore à $f(X_1)$.

Lors de l'exécution de tels calculs selon un mode de réalisation de la présente invention, le temps consommé pour la mise en oeuvre des opérations autres qu'une exponentiation est négligeable au regard du temps consommé par la mise en oeuvre d'une exponentiation. Or, grâce aux caractéristiques de la présente invention, on peut passer de quatre exponentiations, comme décrit ci-avant dans un cas classique, à deux exponentiations au maximum. Une telle réduction du nombre d'exponentiation est très avantageuse.

Dans un mode de réalisation de la présente invention, à l'étape /2/-/ii/, on effectue les étapes suivantes :

- calculer $R_1$ tel que :

$$R_1 = (f(X_1).f(X_2))^{\frac{q+1}{4}}$$

- si $R_1^2$ est égal à f$(X_1)$ .f$(X_2)$, alors décider que le terme f$(X_1)$ .f$(X_2)$ est un terme au carré dans le corps Fq ;

A l'étape /2/-/iii/, on teste si le terme f$(X_1)$ est un terme au carré dans le corps fini Fq selon les étapes suivantes :

- calculer $R_2'$ tel que :

$$R_2' = f(X_1)^{(q-1)-\frac{q+1}{4}}$$

- calculer $R_3'$ tel que :

$$R_3^{'} = R_2^{'2}$$

- calculer R₄' tel que :

$$R_4^{'} = R_3^{'}.f(X_1)$$

si R₄' n'est pas égal à 1, à l'étape /2/-/iv/, on obtient la racine carré de f(X₂) selon l'équation suivante :

$$\sqrt{f(X_2)} = R_1.R_2^{'}$$

Ce mode de réalisation est général et peut aisément être appliqué à toute famille de polynômes vérifiant l'égalité de Skalba. Il convient de noter que, astucieusement, dans le cas où le terme au carré de l'égalité de Skalba (2) est f(X₂), c'est-à-dire le dernier terme à contrôler parmi les trois termes de l'égalité de Skalba, il n'est pas requis d'effectuer une nouvelle exponentiation du type $f(X_1)^{q-1-\frac{q+1}{4}}$. En effet, on peut utiliser avantageusement le terme R₂' afin d'obtenir la racine carré du terme f(X₂). On garantit ainsi que seules deux exponentiations au plus sont mises en oeuvre au cours de l'exécution d'un procédé selon un mode de réalisation de la présente invention.

Dans un mode de réalisation de la présente invention, les polynômes vérifiant l'équation de Skalba en X et Y sont exprimés dans des coordonnées jacobiennes en X', Y' et Z telles que :

$$X' = X \cdot Z^2,$$

$$Y' = Y.Z^3$$

et les opérations d'inversion sont transformées en opération de multiplication.

La transformation en coordonnées jacobiennes permet de transformer les inversions en multiplications, lorsque le terme Z est correctement choisi.

Dans un mode de réalisation de la présente invention, les polynômes vérifiant l'égalité de Skalba sont exprimés dans des coordonnées jacobiennes selon lesquelles le point P (X, Y) s'écrit P (X', Y', Z) telles que :

$$X' = X \cdot Z^2,$$

$$Y' = Y.Z^3$$

où la fonction f s'écrit $f_z(X')$ et vérifie :

$$f_Z(X') = X'^3 + a.X'.Z^4 + b.Z^6$$

la courbe elliptique vérifiant l'équation :

$$Y'^2 = f_Z(X')$$

et les polynômes vérifiant l'égalité de Skalba exprimés en coordonnées jacobiennes sont X'$_1$ (t), X'$_2$ (t), X'$_3$ (t), Z (t) et U' (t) et vérifient l'égalité de Skalba en coordonnées jacobiennes :

$$U'(t)^2 = f_{Z(t)}(X'_1(t)).f_{Z(t)}(X'_2(t)).f_{Z(t)}(X'_3(t))$$

avec Z (t) déterminé de façon à ce que les opérations d'inversion soient transformées en opération de multiplication.

Il s'agit ici de l'application d'une transformation en coordonnées jacobiennes aux polynômes de Ulas vérifiant l'égalité de Skalba, tels qu'énoncés ci-avant. Dans ce cas, on peut à la fois limiter le nombre d'exponentiation à deux, et éliminer tout calcul d'inversion, tout en garantissant une mise en oeuvre à temps constant d'une détermination d'un point P de la courbe elliptique.

Dans un mode de réalisation, les polynômes vérifiant l'égalité de Skalba sont tels qu'il est possible de fixer la valeur de X$_3$ (t) pour tout t possible, tel que f (X$_3$ (t) ) ne soit jamais un terme au carré dans Fq,

dans lequel, à l'étape /2/- /ii/, le terme f (X$_1$) .f (X$_2$) n'est pas un terme au carré dans le corps fini Fq,

dans lequel, à l'étape /2/- /iii/, on teste si le terme f (X$_1$) est un terme au carré dans le corps fini F$_q$ selon les étapes suivantes :

- calculer R$_2$' tel que :

$$R_2^{\cdot} = f(X_1)^{(q-1)-\frac{q+1}{4}}$$

- calculer R$_3$' tel que :

$$R_3^{\cdot} = R_2^{\cdot 2}$$

- calculer R$_4$' tel que :

$$R_4^{\cdot} = R_3^{\cdot}.f(X_1)$$

dans lequel, si R$_4$' n'est pas égal à 1, à l'étape /2/-/iv/, on obtient la racine carré de f(X$_2$) selon l'équation suivante :

$$\sqrt{f(X_2)} = R_1.R_2^{\cdot}$$

où

$$R_1 = (f(X_1).f(X_2))^{\frac{q+1}{4}}$$

dans lequel R$_1$ est obtenu préalablement selon l'équation suivante :

$$R_1 = (f(X).f(X_2))^{\frac{q+1}{4}} = U.f(u)^{(q-1)-\frac{q+1}{4}}$$

Ainsi, dans un cas particulier, il est possible de limiter encore le nombre d'exponentiations à effectuer en utilisant une famille particulière de polynômes, tels qu'il est possible de fixer la valeur de $X_3$ (t) pour tout t possible, tel que f ($X_3$ (t) ) ne soit jamais un terme au carré dans Fq. La famille de polynômes de Ulas tels que décrit dans le document 'Rational points on certain hyperelliptic curves over finite fileds' de Macie Ulas, daté du 11 juin 2007 peut avantageusement être utilisée ici.

Pour une telle famille de polynômes vérifiant l'égalité de Skalba, on peut écrire :

$$X_1(t,u) = -\frac{b}{a}\left(1 + \frac{1}{t^4 f(u) + t^2 f(u)}\right)$$

$$X_2(t,u) = t^2 f(u) X_1(t,u)$$

$$X_3(t,u) = u$$

$$U(t,u) = t^3 f(u)^4 f(X_1(t,u))$$

où $f(u) = u^3 + au + b$ où a et b sont des éléments de Fq tel que leur produit ne soit pas nul.

Il est possible d'utiliser avantageusement ces polynômes en déterminant une valeur du paramètre u fixée telle que $f(X_3) = f(u)$ ne soit pas un terme au carré dans Fq,

Alors, à l'étape /2/- /ii/, le terme $f(X_1) . f(X_2)$ n'est pas un terme au carré dans le corps fini Fq, puis, à l'étape /1/- /iii/, on teste si le terme $f(X_1)$ est un terme au carré dans le corps fini $F_q$ selon les étapes suivantes :

- calculer $R_2'$ tel que :

$$R_2' = f(X_1)^{(q-1)-\frac{q+1}{4}}$$

- calculer $R_3'$ tel que :

$$R_3' = R_2'^2$$

- calculer $R_4'$ tel que :

$$R_4' = R_3'.f(X_1)$$

Puis, si $R_4'$ n'est pas égal à 1, à l'étape /1/- /iv/, on obtient la racine carré de $f(X_2)$ selon l'équation suivante :

$$\sqrt{f(X_2)} = R_1.R_2'$$

où

$$R_1 = (f(X_1).f(X_2))^{\frac{q+1}{4}}$$

$R_1$ peut avantageusement être obtenu préalablement selon l'équation suivante :

$$R_1 = (f(X).f(X_2))^{\frac{q+1}{4}} = U.f(u)^{(q-1)-\frac{q+1}{4}}$$

En particulier, le terme $f(u)^{(q-1)-\frac{q+1}{4}}$ peut être calculé par avance. Ceci est possible car f(u) est également calculé par avance. Dans ce cas particulier de polynômes vérifiant l'égalité de Skalba, il est donc possible de ne pas avoir à effectuer l'exponentiation relative au calcul de $(f(X_1(t)).f(X_2(t)))^{\frac{q+1}{4}}$ au cours de la mise en oeuvre du procédé, mais juste la multiplication $U(t).(f(u))^{(q-1)-\frac{q+1}{4}}$. Ainsi, la mise en oeuvre d'un tel procédé correspond alors à une seule exponentiation, celle du calcul de $R_2' = f(X_1)^{(q-1)-\frac{q+1}{4}}$.

Dans ce contexte, ces polynômes particuliers sont exprimés dans des coordonnées jacobiennes selon lesquelles le point P (X, Y) s'écrit P (X', Y', Z) telles que :

$$X' = X.Z^2,$$

$$Y' = Y.Z^3$$

où la fonction f s'écrit $f_Z(X')$ et vérifie :

$$f_Z(X') = X'^3 + a.X'.Z^4 + b.Z^6$$

la courbe elliptique vérifiant l'équation :

$$Y'^2 = f_Z(X')$$

où les polynômes vérifiant l'égalité de Skalba exprimés en coordonnées jacobiennes sont $X'_1$ (t), $X'_2$ (t), Z (t) et U' (t) et vérifient l'égalité de Skalba en coordonnées jacobiennes :

$$U'(t)^2 = f_{Z(t)}(X'_1(t)).f_{Z(t)}(X'_2(t)).f(X_3(t))$$

et où Z (t) est déterminé de façon à ce que les opérations d'inversion soient transformées en opération de multiplication.
A l'étape /1/, la valeur du paramètre t peut être obtenue en fonction d'un mot de passe ou un identifiant. On peut ainsi prévoir de prendre en tant que paramètre le mot de passe directement ou encore un dérivé du mot de passe.
Dans un mode de réalisation de la présente invention, l'application cryptographique est une application d'authentification ou d'identification par une entité de contrôle, et à l'étape /1/, on réalise les étapes suivantes :

/a/ générer une valeur aléatoire ;
/b/ obtenir une valeur chiffrée en chiffrant ladite valeur aléatoire sur la base d'une fonction de chiffrement utilisant une clé de chiffrement déterminée à partir d'un mot de passe ou identifiant correspondant au paramètre ; et

/c/ transmettre la valeur chiffrée à l'entité de contrôle.

En procédant ainsi, l'entité de contrôle est en mesure d'obtenir la valeur aléatoire en fonction de la valeur chiffrée reçue à partir du mot de passe. Puis, elle récupère la valeur du paramètre t en appliquant une fonction adaptée.

Un deuxième aspect de la présente invention propose un dispositif électronique comprenant des moyens adaptés pour la mise en oeuvre d'un procédé d'exécution d'un calcul cryptographique selon le premier aspect de la présente invention.

D'autres aspects, buts et avantages de l'invention apparaîtront à la lecture de la description d'un de ses modes de réalisation.

L'invention sera également mieux comprise à l'aide des figures suivantes :

- la figure 1 illustre les principales étapes d'un procédé d'exécution d'un calcul cryptographique selon un mode de réalisation de la présente invention ;
- la figure 2 illustre un procédé d'exécution d'un calcul cryptographique en détail selon un mode de réalisation de la présente invention ;
- la figure 3 illustre un procédé d'exécution d'un calcul cryptographique en détail selon un mode de réalisation de la présente invention dans le cas particulier des polynômes d'Ulas.

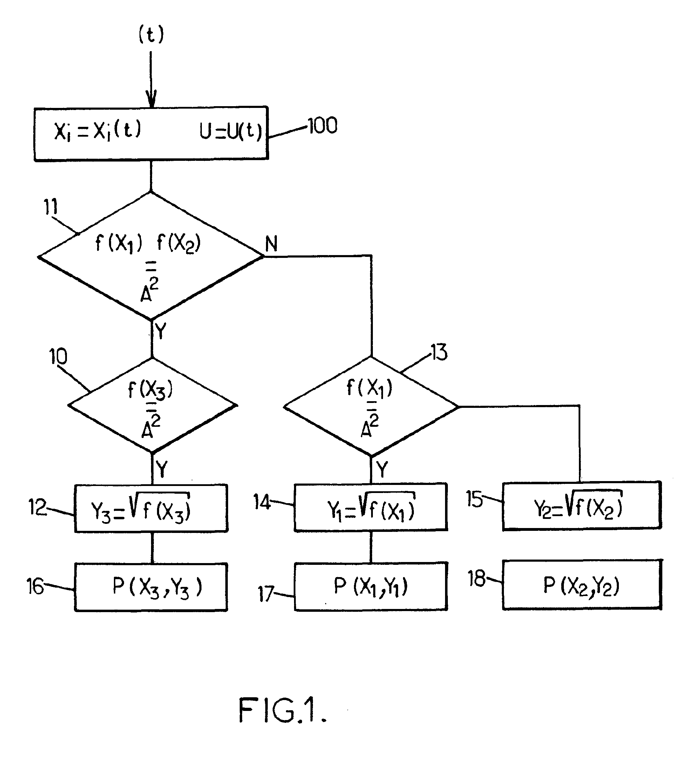

La figure 1 illustre les principales étapes d'un procédé d'exécution d'un calcul selon un mode de réalisation de la présente invention.

Ces principales étapes sont adaptées pour la détermination d'un point sur une courbe elliptique dans le but d'utiliser ce point au sein d'une application cryptographique. Un tel calcul cryptographique peut être exécuté dans un composant électronique de manière sécurisée, c'est-à-dire sans que la détermination de ce point ne donne une quelconque information sur le point déterminé.

Ce calcul comprend, dans un corps fini $F_q$, où q est égal à 3 mod 4, une étape d'obtention d'un point $P(X,Y)$ sur une courbe elliptique vérifiant l'équation :

$$Y^2 = f(X)$$

Un point $P(X,Y)$ a son abscisse X qui correspond à l'un parmi $X_1(t)$, $X_2(t)$ et $X_3(t)$, pour une valeur de t obtenue, tels que :

$$f(X_1(t)).f(X_2(t)).f(X_3(t))=U^2(t) \qquad (2)$$

où $X_1(t)$, $X_2(t)$, $X_3(t)$ et $U(t)$ sont des polynômes vérifiant l'équation de Skalba dans le corps fini $F_q$.

Plus précisément, les polynômes vérifiant l'égalité de Skalba, tels que définis dans le document 'Rational points on certain hyperelliptic curves over finite fileds' de Maciej Ulas, daté du 11 juin 2007 sont fonction de deux paramètres u et t. Dans le contexte de la présente invention, un des paramètres peut avantageusement être fixé et par conséquent les polynômes vérifiant l'équation de Skalba sont alors fonction d'un seul paramètre t.

Afin de déterminer un point sur la courbe, on cherche à déterminer, étant donné des paramètres d'entrée u et t, celles parmi les valeurs $X_1= X_1 (t, u)$, $X_2= X_2 (t, u)$, $X_3= X_3 (t, u)$ qui correspond à un terme au carré dans le corps fini Fq. A cet effet, il est avantageusement prévu d'appliquer deux traitements différents en fonction du fait que le terme $f(X_1) .f(X_2)$ est un terme au carré dans le corps fini Fq ou non.

A une étape initiale 100, on prend le paramètre t en compte et on calcule :

$X_i=X_i(t)$ pour i compris entre 1 et 3,

et

$$U=U(t)$$

A une étape 11, on décide si ce produit $f(X_1) .f(X_2)$ est un terme au carré. Cette décision peut être basée sur des calculs préalables ou encore sur un contrôle en cours de mise en oeuvre du procédé. Si le terme $f(X_1) .f(X_2)$ est un terme au carré alors le terme $f(X_3)$ est également un terme au carré. On prévoit dans ce cas de calculer la racine carré du terme f (X₃), à une étape 12. A une étape 16, le point P ainsi déterminé a pour abscisse $X_3$ et pour ordonnée $Y_3$ qui vérifie l'équation suivante :

$$Y_3 = \sqrt{f(X_3)}$$

Il convient de noter que si le terme produit f (X₁) .f (X₂) est un terme au carré, il en découle que le terme f (X₃) est également un terme au carré. Toutefois, afin de conserver une détermination de point de la courbe elliptique à temps constant, on prévoit de mettre en oeuvre un test 10 de sorte à contrôler que le terme f (X₃) est effectivement un terme au carré. Ce test 10 permet de garantir la mise en oeuvre du procédé selon un mode de réalisation de la présente invention à temps constant.

Dans l'autre cas, c'est-à-dire lorsque le terme f (X₁) .f (X₂) n'est pas un terme au carré, alors on peut en déduire que soit f (X₁), soit f (X₂) est un terme au carré. On peut donc prévoir de contrôler en premier lieu si le terme f (X₁) est un terme au carré à une étape 13. Si le test est positif, on calcule ensuite sa racine carré à une étape 14 pour obtenir l'abscisse du point P :

$$Y_1 = \sqrt{f(X_1)}$$

A une étape 17, on obtient alors le point P qui a pour ordonnée $X_1$ et pour abscisse $Y_1$.

Si le test à l'étape 13 est négatif, alors on peut en déduire que le terme f(X₂) est un terme au carré. Par conséquent, on obtient à une étape 15 l'abscisse $Y_2$ d'un point P sur la courbe elliptique selon l'équation :

$$Y_2 = \sqrt{f(X_2)}$$

On peut ainsi fournir à une étape 18 un point P(X₂, Y₂) de la courbe à une étape 18.

Il convient de noter qu'atteindre les étapes 16, 17 ou encore 18 d'obtention d'un point de la courbe elliptique selon un mode de réalisation de la présente invention requiert des opérations similaires. Ainsi, quel que soit les paramètres d'entrée t et u, il n'est pas possible de faire une attaque sur la base du temps passé.

Le point P(Xᵢ,Yᵢ), pour un i compris entre 1 et 3, peut ensuite être utilisé avantageusement dans une application cryptographique de chiffrement ou de hachage ou de signature ou d'authentification ou d'identification, puisque sa détermination n'a fourni aucun élément susceptible de violer son secret.

Dans le corps Fq, q correspondant à 3 mod 4, il est possible de contrôler si un terme est un terme au carré de différentes manières. Les tests de terme au carré tels que les tests 10 et 13 de la figure 1 peuvent être réalisés comme suit.

Dans un mode de réalisation de la présente invention, lorsqu'on cherche à déterminer si un terme A est un terme au carré dans Fq, on peut effectuer les étapes suivantes :

$$W_1 = \frac{1}{A^{\frac{q+1}{4}}} = A^{(q-1)-\frac{q+1}{4}} \tag{i}$$

$$W_2 = W_1^2 \tag{ii}$$

$$W_3 = W_2.A \tag{iii}$$

In fine, si le terme A est un terme au carré alors :

-

$W_1$ correspond à l'inverse de la racine carré de A, soit $1/\sqrt{A}$, car une exponentiation à (q-1) correspond à une inversion et une exponentiation à (q+1)/4 correspond à une racine carré dans le corps fini Fq;

- $W_2$ correspond à l'inverse de A ; et
- $W_3$ correspond à la valeur 1.

Ainsi, lorsque $W_3$ est égal à la valeur 1, on en conclue que le terme A est un terme au carré dans le corps fini Fq. Si A n'est pas un terme au carré alors $W_3$ n'est pas égal à 1.

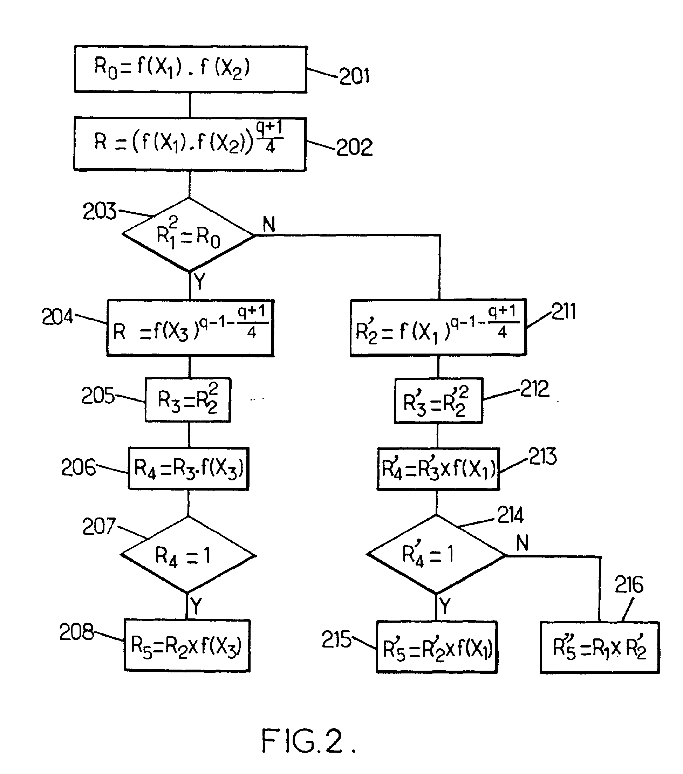

La figure 2 illustre la mise en oeuvre d'un procédé d'exécution d'un calcul selon un mode de réalisation de la présente invention.

Dans un mode de réalisation de la présente invention, à une étape 201, on effectue la multiplication suivante :

$$R_0 = f(X1).f(X2)$$

Puis, on contrôle si ce terme $R_0$ est un terme au carré en appliquant les étapes (iv) et (v). Ainsi, à une étape 202, on calcule :

$$R_1 = R_0^{(q+1)/4} \qquad\qquad \text{(iv)}$$

Puis, à l'étape 203, on détermine si l'équation suivante est vérifiée :

$$R_1^2 = R_0 \qquad\qquad \text{(v)}$$

On décide si le terme $R_0$, égal à $f(X_1).f(X_2)$, est un terme au carré ou non. Dans le cas où le terme $R_0$ est un terme au carré, on met en oeuvre un test visant à déterminer si le terme $f(X_3)$ est un terme au carré. Le résultat de ce dernier test est connu préalablement puisque si $R_0$ est un terme au carré alors ce test est positif. Toutefois, dans le but de garantir un temps constant, il convient de le mettre en oeuvre selon les étapes (i) à (iii).

Ainsi, on effectue à une étape 204 le calcul suivant :

$$R_2 = f(X_3)^{(q-1-(q-1)/4)}$$

Ici, $R_2$ correspond au calcul de l'inverse de la racine carré de $f(X_3)$, dans le cas où f(X3) est un terme au carré.

Puis, à une étape 205, on calcule l'équation suivante :

$$R_3 = R_2^2$$

Ici, $R_3$ correspond à l'inverse de $f(X_3)$.

Puis, à une étape 206, on multiplie $R_3$ par le terme $f(X_3)$ pour obtenir un terme $R_4$. Comme on sait que $f(X_3)$ est un terme au carré, on sait également que le terme $R_4$ est égal à 1. Ces étapes 205 et 206 sont mises en oeuvre afin de garantir la détermination d'un point P de la courbe elliptique à temps constant.

A une étape 207, on teste donc si le terme $R_4$ correspond à 1. Dans le cas présent, ce test est toujours positif, puisqu'il découle du test 203.

Ensuite, à une étape 208, on effectue le calcul suivant :

$$R_5 = R_2.f(X_3)$$

Ici, on obtient un point P de la courbe qui a pour abscisse $X_3$ et pour ordonnée la racine carré de $f(X_3)$, c'est-à-dire la valeur $R_5$.

Dans le cas où à l'étape 11 on décide que le terme f $(X_1)$ .f $(X_2)$ n'est pas un terme au carré, alors soit le terme f $(X_1)$ soit le terme f $(X_2)$ est un terme au carré.

Il s'agit par la suite de déterminer lequel de ces deux termes f$(X_1)$ et f$(X_2)$ correspond à un terme au carré.

A cet effet, des opérations similaires à celles décrites ci-avant sont effectuées, à la différence que dans ce cas, le terme f$(X_1)$ peut ne pas être un terme au carré.

A une étape 211, on calcule l'équation suivante :

$$R'_2 = f(X_1)^{q-1-(q+1)/4}$$

Dans le cas où f$(X_1)$ est un terme au carré, alors $R'_2$ correspond à la valeur de l'inverse de la racine carré de f$(X_1)$ comme décrit pour l'étape (i). Puis, on met au carré ce dernier terme, à une étape 212 :

$$R'_3 = R'_2{}^2$$

pour obtenir l'inverse de f$(X_1)$ dans le cas où f$(X_1)$ serait un terme au carré.

Ainsi, en multipliant $R_3'$ par le terme f $(X_1)$, on obtient $R_4'$ à une étape 213 qui vaut la valeur 1 si le terme f $(X_1)$ est effectivement un terme au carré. Dans ce cas, le test effectué à une étape 214 au cours duquel on compare le terme $R_4'$ à la valeur 1 est positif.

Puis, on effectue le calcul suivant à une étape 215:

$$R'_5 = R'_2 . f(X_1)$$

Le terme $R'_5$ correspond alors à f$(X_1)$.

On obtient un point P de la courbe avec son abscisse $X_1$ et son ordonnée $R'_5$.

Dans le cas où le test 214 est négatif, le terme f$(X_1)$ n'est pas un terme au carré. Alors, il en découle que le terme au carré de l'équation de Skalba (2) est le terme f$(X_2)$. On effectue dans ce cas, à une étape 216, le calcul suivant :

$$R''_5 = R_1 . R'_2$$

Il convient de noter que l'équation ci-dessus permet d'obtenir avantageusement la racine carré de f$(X_2)$ sans toutefois effectuer une opération d'exponentiation comme celle effectuée à l'étape 204 ou encore à l'étape 211. En effet, ici il s'agit d'effectuer astucieusement une multiplication au lieu d'une exponentiation.

On obtient alors $R_5''$ qui correspond au terme f$(X_2)$, fourni à une étape 216. On a ainsi déterminé un point P de la courbe elliptique qui a pour abscisse $X_2$ et pour ordonnée $R_5''$.

Dans le mode de réalisation décrit ci-avant en référence à la figure 2, quelle que soit la détermination du point P, c'est-à-dire que cette détermination soit basée sur la valeur $X_1$ ou $X_2$ ou encore $X_3$, des calculs similaires sont mis en oeuvre garantissant ainsi une détermination de point de la courbe elliptique à temps constant.

De manière plus précise, deux opérations d'exponentiation sont mises en oeuvre, une exponentiation à l'étape 202 et une autre exponentiation à l'étape 204 ou 211 selon le résultat du test 203. Ainsi, il n'est plus requis d'effectuer quatre exponentiations pour déterminer un point sur une courbe dans le contexte des polynômes de Skalba à temps constant.

Dans un mode de réalisation de la présente invention, il est possible de choisir des polynômes vérifiant l'égalité de Skalba de telle sorte que le polynôme f$(X_3(t))$ ne puisse jamais correspondre à un terme au carré quelque soit la valeur de t. Dans ce cas, l'équation de Skalba :

$$f(X_1(t)).f(X_2(t)).f(X_3(t)) = U^2(t) \qquad (2)$$

peut s'écrire sous la forme :

$$(f(X_1(t)).f(X_2(t)).f(X_3(t))^{\frac{q+1}{4}} = (U(t)^2)^{\frac{q+1}{4}} = U(t)$$

puis encore sous la forme :

$$(f(X_1(t)).f(X_2(t)))^{\frac{q+1}{4}} = \frac{U(t)}{f(X_3(t))^{\frac{q+1}{4}}}$$

et encore :

$$(f(X_1(t)).f(X_2(t)))^{\frac{q+1}{4}} = U(t).(f(X_3(t))^{q-1-\frac{q+1}{4}} \qquad (4)$$

Toutes ces équations ne sont valables que si la condition q=3 mod 4 est réalisée. Or, si le terme $(f(X_3(t))^{q-1-\frac{q+1}{4}}$ de cette dernière équation correspond à une valeur fixe, on est en mesure de calculer efficacement la valeur du terme $R_1 = (f(X_1).f(X_2))^{\frac{q+1}{4}}$ grâce à la multiplication $U.(f(X_3(t))^{q-1-\frac{q+1}{4}}$. Dans ce cas, on peut déterminer un point de la courbe elliptique en mettant en oeuvre seulement une opération d'exponentiation, celle qui correspond à l'étape 204 du test 10, ou celle qui correspond à l'étape 211 du test 13, suivant le cas.

Ces conditions peuvent être remplies en utilisant par exemple un ensemble de polynômes vérifiant l'équation de Skalba tels que décrit dans le document 'Rational points on certain hyperelliptic curves over finite fileds' de Macie Ulas, daté du 11 juin 2007. Dans ce document, les polynômes de vérifiant l'équation de Skalba (2) sont décrits :

$$X_1(t,u) = -\frac{b}{a}\left(1 + \frac{1}{t^4 f(u) + t^2 f(u)}\right)$$

$$X_2(t,u) = t^2 f(u) X_1(t,u)$$

$$X_3(t,u) = u$$

$$U(t,u) = t^3 f(u)^4 f(X_1(t,u))$$

où

$$f(u) = u^3 + au + b$$

où a et b sont des éléments de Fq tel que leur produit ne soit pas nul.

Ainsi, en déterminant une valeur de u qui soit fixée et qui ne corresponde pas à un terme au carré dans Fq, alors la valeur de $R_1$ est une valeur figée qui peut être pré- calculée selon l'équation (4), pour toute détermination de point P selon un mode de réalisation de la présente invention.

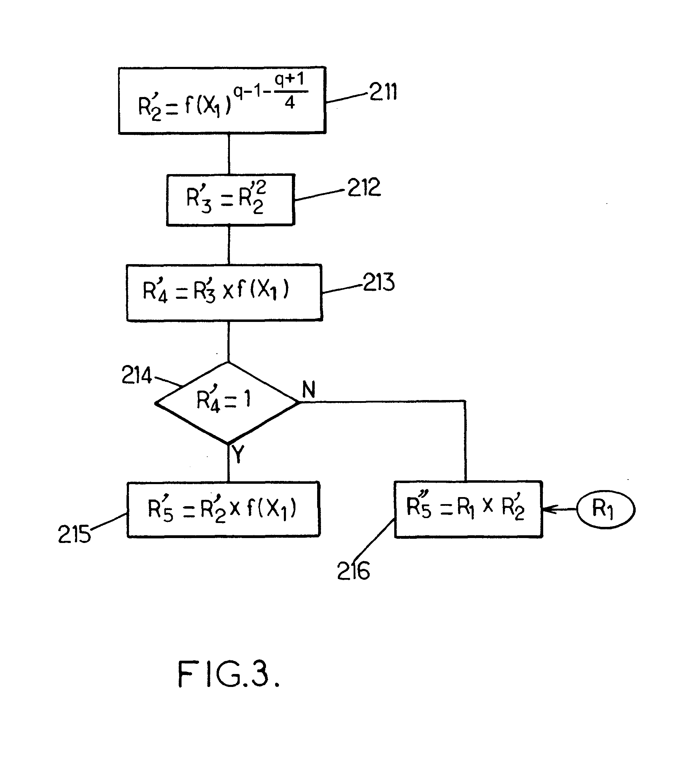

La figure 3 illustre un procédé d'exécution d'un calcul cryptographique en détail selon un mode de réalisation de la présente invention dans le cas particulier des polynômes d'Ulas, pour un polynôme $X_3(t,u)$ fixé selon un mode de réalisation de la présente invention. Dans ce cas, les étapes 211 à 216 seulement peuvent être mises en oeuvre. Si l'étape 216 est réalisée, alors la valeur R1 peut être récupérée d'une zone mémoire car elle a été calculée préalablement.

De ce fait on peut réduire encore le nombre d'exponentiation requis pour déterminer un point de la courbe, à une seule exponentiation celle qui correspond au test 10 ou au test 13.

Dans un mode de réalisation de la présente invention, on prévoit d'utiliser avantageusement les coordonnées jacobiennes. Une telle transformation en coordonnées jacobiennes permet de transformer les opérations d'inversion en opérations de multiplication qui sont plus rapides et plus aisées à mettre en oeuvre. Il convient de noter qu'un tel mode de réalisation peut être appliqué non à toutes les courbes de type Skalba, y compris au cas particulier des courbes d'Ulas.

L'équation d'une courbe elliptique :

$$X^3 + aX + b = Y^2$$

peut s'écrire en coordonnées jacobiennes:

$$X'^3 + aX'Z^4 + bZ^6 = Y'^2$$

On note que les coordonnées d'un point (X, Y) peuvent s'écrire en coordonnées jacobiennes (X', Y', Z') tels que:

$$X' = X \cdot Z^2$$

et

$$Y' = Y \cdot Z^3$$

Il convient donc de déterminer un polynôme Z(t,u) de telle sorte que les coordonnées jacobiennes X', Y' et Z puissent s'écrire sans inversion.

Dans les sections suivantes, on applique cette transformation en coordonnées jacobiennes à un cas particulier, celui des courbes Ulas tel que décrit ci-avant.

Dans ce contexte, on élimine toute opération d'inversion en prenant :

$$Z(t,u) = a(t^4 f(u)^2 + t^2 f(u))$$

dans lequel u est fixé.

En effet, on peut alors écrire les polynômes de Ulas sous la forme suivante en coordonnées jacobiennes :

$$X'_1(t,u) = -b.Z(t,u)(t^4 f(u)^2 + t^2 f(u) + 1)$$

$$X'_2(t,u) = t^2.f(u).X'_1(t,u)$$

$$X'_3(t,u) = u$$

Il convient donc de noter qu'il n'y a plus d'inversion en coordonnées jacobiennes. Cette opération pouvant être aussi couteuse qu'une exponentiation, ces coordonnées permettent une amélioration significative du temps de calcul.

Puis, pour obtenir la coordonnée Y' jacobienne, il convient de calculer U' (t, u), l'équivalent de U (t, u) en coordonnées jacobiennes.

Dans ce contexte, on a en coordonnées classiques :

$$U(t,u)^2 = f(X_1(t,u)).f(X_2(t,u)).f(X_3(t,u))$$

On peut alors écrire en coordonnées jacobiennes :

$$U(t,u)^2 = f(X'_1(t,u)/Z(t,u)^2).f(X'_2(t,u)/Z(t,u)^2).f(X'_3(t,u)/Z(t,u)^2)$$

En écrivant :

$$f_{Z(t)}(X') = X'^3 + a.X'.Z(t)^4 + b.Z(t)^6 = Z^6.f(\frac{X}{Z^2})$$

on obtient l'équation suivante :

$$Z^{18}(t,u).U(t,u)^2 = (Z(t,u)^9.U(t,u)^2 = f_{Z(t,u)}(X'_1(t,u)).f_{Z(t,u)}(X'_2(t,u)).f_{Z(t,u)}(X'_3(t,u))$$

Puis :

$$U'(t,u) = Z(t,u)^9.U(t,u)$$

où U'(t,u) est l'expression en coordonnées jacobiennes de U(t,u).

Dans le cas où l'on considère que U(t,u) vérifie l'équation :

$$U(t,u) = t^3.f(u)^2.f(X_2(t,u))$$

on peut alors écrire :

$$U'(t,u) = t^3.f(u)^2.f_{Z(t,u)}(X'_2(t,u))Z(t,u)^3$$

L'égalité de Skalba en coordonnées jacobiennes devient :

$$U'(t,u)^2 = f_{Z(t,u)}(X'_1(t,u)).f_{Z(t,u)}(X'_2(t,u)).f_{Z(t,u)}(X'_3(t,u))$$

Néanmoins, comme dans le cas des polynômes d'Ulas il est possible d'imposer que $X'_3(t, u)$ soit tel que $f_{z(t,u)}(X'3(t, u)$ ne soit jamais un carré. Dans ce cas, on a :

$$U''(t,u) = t^3.f(u)^2.f_{Z(t,u)}(X'_2(t,u))$$

et l'égalité de Skalba correspondante est :

$$U''(t,u)^2 = f_{Z(t,u)}(X'_1(t,u)).f_{Z(t,u)}(X'_2(t,u)).f(X'_3(t,u))$$

La présente invention peut avantageusement être mise en oeuvre dans tout type de calcul cryptographique utilisant des courbes elliptiques. Elle peut notamment être avantageuse au sein de protocoles d'authentification par mot de passe, comme PACE (pour 'Password Authenticated Connection Establishment' en anglais). Dans ce cas, elle permet une amélioration des performances de calculs, tout en ne permettant aucune attaque liée au temps d'exécution du calcul cryptographique.

La présente invention peut également être avantageusement appliquée dans le contexte des protocoles respectant la vie privée, tels que ceux qui sont utilisés pour le contrôle de documents d'identité électronique, comme les passeports électroniques.

**Revendications**

1.  Procédé d'exécution d'un calcul cryptographique dans un composant électronique comprenant une étape d'obtention d'un point P(X,Y) à partir d'au moins un paramètre t, sur une courbe elliptique vérifiant l'équation :

$$Y^2 = f(X) ;$$

et
à partir de polynômes $X_1(t)$, $X_2(t)$, $X_3(t)$ et $U(t)$ vérifiant l'égalité de Skalba suivante :

$$f(X_1(t)).f(X_2(t)).f(X_3(t))=U(t)^2$$

dans le corps fini $F_q$, quel que soit le paramètre t, q vérifiant l'équation q = 3 mod 4;
ledit procédé comprenant les étapes suivantes :

/1/ obtenir une valeur du paramètre t ;
/2/ déterminer le point P en effectuant les sous étapes suivantes :

/i/ calculer $X_1= X_1(t)$, $X_2= X_2(t)$, $X_3= X_3(t)$ et $U=U(t)$
/ii/ si le terme $f(X_1).f(X_2)$ est un terme au carré dans le corps fini $F_q$ alors tester si le terme $f(X_3)$ est un terme au carré dans le corps fini Fq et calculer la racine carré du terme $f(X_3)$, le point P ayant pour abscisse $X_3$ et pour ordonnée la racine carré du terme $f(X_3)$ ;
/iii/ sinon tester si le terme $f(X_1)$ est un terme au carré dans le corps fini Fq et dans ce cas, calculer la racine carré du terme $f(X_1)$, le point P ayant pour abscisse $X_1$ et pour ordonnée la racine carré du terme $f(X_1)$ ;
/iv/ sinon calculer la racine carré du terme $f(X_2)$, le point P ayant pour abscisse $X_2$ et pour ordonnée la racine carré du terme $f(X_2)$ ;

/3/ utiliser ledit point P dans une application cryptographique de chiffrement ou de hachage ou de signature ou d'authentification ou d'identification.

2.  Procédé d'exécution d'un calcul cryptographique selon la revendication 1, dans lequel à l'étape /2/-/ii/, on effectue les étapes suivantes :

- calculer $R_1$ tel que :

$$R_1 = (f(X_1).f(X_2))^{\frac{q+1}{4}}$$

- si $R_1{}^2$ est égal à f $(X_1)$ .f $(X_2)$, alors décider que le terme f $(X_1)$ .f $(X_2)$ est un terme au carré dans le corps Fq ; dans lequel, à l'étape /2/- /iii/, on teste si le terme f $(X_1)$ est un terme au carré dans le corps fini $F_q$ selon les étapes suivantes :
- calculer $R_2$' tel que :

$$R_2^{'} = f(X_1)^{(q-1)} - \frac{q+1}{4}$$

- calculer $R_3$' tel que :

$$R_3^{'} = R_2^{'2}$$

- calculer $R_4$' tel que :

$$R_4^{'} = R_3^{'}.f(X_1)$$

dans lequel, si $R_4$' n'est pas égal à 1, à l'étape /2/-/iv/, on obtient la racine carré de f$(X_2)$ selon l'équation suivante :

$$\sqrt{f(X_2)} = R_1.R_2^{'}$$

3. Procédé d'exécution d'un calcul cryptographique selon la revendication 1 ou 2, dans lequel lès polynômes vérifiant l'égalité de Skalba sont exprimés dans des coordonnées jacobiennes selon lesquelles le point P (X, Y) s'écrit P (X', Y', Z) telles que :

$$X' = X \cdot Z^2 ,$$

$$Y' = Y.Z^3$$

où la fonction f s'écrit $f_z$ (X') et vérifie :

$$f_Z(X') = X'^3 + a.X'.Z^4 + b.Z^6$$

la courbe elliptique vérifiant l'équation :

$$Y'^2 = f_Z(X')$$

dans lequel les polynômes vérifiant l'égalité de Skalba exprimés en coordonnées jacobiennes sont X'$_1$ (t), X'$_2$ (t), X'$_3$ (t), Z (t) et U' (t) et vérifient l'égalité de Skalba en coordonnées jacobiennes :

$$U'(t)^2 = f_{Z(t)}(X'_1(t)).f_{Z(t)}(X'_2(t)).f_{Z(t)}(X'_3(t))$$

et dans lequel Z (t) est déterminé de façon à ce que les opérations d'inversion soient transformées en opération de multiplication.

4. Procédé d'exécution d'un calcul cryptographique selon la revendication 1 ou 2, dans lequel les polynômes vérifiant l'égalité de Skalba sont tels qu'il est possible de fixer la valeur de $X_3$ (t) pour tout t possible, tel que f ($X_3$ (t) ) ne soit jamais un terme au carré dans $F_q$,
et dans lequel, à l'étape /2/- /ii/, le terme f ($X_1$) .f ($X_2$) n'est pas un terme au carré dans le corps fini Fq,
dans lequel, à l'étape /2/- /iii/, on teste si le terme f ($X_1$) est un terme au carré dans le corps fini $F_q$ selon les étapes suivantes :

- calculer $R_2$' tel que :

$$R_2^{'} = f(X_1)^{(q-1)-\frac{q+1}{4}}$$

- calculer $R_3$' tel que :

$$R_3^{'} = R_2^{'2}$$

- calculer $R_4$' tel que :

$$R_4^{'} = R_3^{'}.f(X_1)$$

dans lequel, si $R_4$' n'est pas égal à 1, à l'étape /2/-/iv/, on obtient la racine carré de f($X_2$) selon l'équation suivante :

$$\sqrt{f(X_2)} = R_1.R_2^{'}$$

où

$$R_1 = (f(X_1).f(X_2))^{\frac{q+1}{4}}$$

dans lequel $R_1$ est obtenu préalablement selon l'équation suivante :

$$R_1 = (f(X).f(X_2))^{\frac{q+1}{4}} = U.f(u)^{(q-1)-\frac{q+1}{4}}$$

5. Procédé d'exécution d'un calcul cryptographique selon la revendication 4, dans lequel les polynômes vérifiant l'égalité de Skalba sont exprimés dans des coordonnées jacobiennes selon lesquelles le point P (X, Y) s'écrit P (X', Y', Z) telles que :

$$X' = X .Z^2,$$

$$Y' = Y.Z^3$$

où la fonction f s'écrit $f_z$ (X') et vérifie :

$$f_Z(X') = X'^3 + a.X'.Z^4 + b.Z^6$$

la courbe elliptique vérifiant l'équation :

$$Y'^2 = f'_Z(X')$$

dans lequel les polynômes vérifiant l'égalité de Skalba exprimés en coordonnées jacobiennes sont X'$_1$ (t), X'$_2$ (t), Z (t) et U' (t) et vérifient l'égalité de Skalba en coordonnées jacobiennes :

$$U'(t)^2 = f_{Z(t)}(X'_1(t)).f_{Z(t)}(X'_2(t)).f(X_3(t))$$

et dans lequel Z (t) est déterminé de façon à ce que les opérations d'inversion soient transformées en opération de multiplication.

6. Procédé d'exécution d'un calcul cryptographique selon l'une quelconque des revendications précédentes, dans lequel, à l'étape /1/, la valeur du paramètre t est obtenue en fonction d'un mot de passe ou un identifiant.

7. Procédé d'exécution d'un calcul cryptographique selon l'une quelconque des revendications 1 à 5, dans laquelle l'application cryptographique est une application d'authentification ou d'identification par une entité de contrôle, et dans lequel, à l'étape /1/, on réalise les étapes suivantes :

/a/ générer une valeur aléatoire ;
/b/ obtenir une valeur chiffrée en chiffrant ladite valeur aléatoire sur la base d'une fonction de chiffrement utilisant une clé de chiffrement déterminée à partir d'un mot de passe ou identifiant correspondant au paramètre ; et
/c/ transmettre la valeur chiffrée à l'entité de contrôle.

8. Dispositif électronique comprenant des moyens adaptés pour la mise en oeuvre d'un procédé d'exécution d'un calcul cryptographique selon l'une quelconque des revendications 1 à 7.

**Patentansprüche**

1. Verfahren zum Ausführen einer kryptografischen Berechnung in einem elektronischen Bauelement, das einen Schritt des Erhaltens eines Punkts P (X, Y) ausgehend von mindestens einem Parameter t auf einer elliptischen Kurve aufweist, die die folgende Gleichung erfüllt:

$$Y^2 = f(X);$$

und
ausgehend von Polynomen $X_1(t)$, $X_2(t)$, $X_3(t)$ und U(t) die folgende Skalba-Gleichheit erfüllt:

$$f(X_1(t)).f(X_2(t)).f(X_3(t))= U(t)^2$$

und zwar im endlichen Körper $F_q$, unabhängig vom Parameter t, wobei q die Gleichung q = 3 mod 4 erfüllt; wobei das Verfahren die folgenden Schritte aufweist:

/1/ Erhalten eines Werts des Parameters t;

/2/ Bestimmen des Punkts P durch Durchführen der folgenden Teilschritte:

/i/ Berechnen von $X_1=X_1(t)$, $X_2=X_2(t)$, $X_3=X_3(t)$ und $U=U(t)$

/ii/ wenn der Term $f(X_1).f(X_2)$ ein Term im Quadrat im endlichen Körper Fq ist, Testen, ob der Term $f(X_3)$ ein Term im Quadrat im endlichen Körper $F_q$ ist und Berechnen der Quadratwurzel des Terms $f(X_3)$, wobei der Punkt P als Abszisse $X_3$ und als Ordinate die Quadratwurzel des Terms $f(X_3)$ aufweist;

/iii/ ansonsten Testen, ob der Term $f(X_1)$ ein Term im Quadrat im endlichen Körper $F_q$ ist und, wenn dies der Fall ist, Berechnen der Quadratwurzel des Terms $f(X_1)$, wobei der Punkt P als Abszisse $X_1$ und als Ordinate die Quadratwurzel des Terms $f(X_1)$ aufweist;

/iv/ ansonsten Berechnen der Quadratwurzel des Terms $f(X_2)$, wobei der Punkt P als Abszisse $X_2$ und als Ordinate die Quadratwurzel des Terms $f(X_2)$ aufweist;

/3/ Verwenden des Punkts P in einer kryptografischen Anwendung zur Verschlüsselung oder zum Hashen oder zur Signatur oder zur Authentifizierung oder zur Identifizierung.

2. Verfahren zum Ausführen einer kryptografischen Berechnung nach Anspruch 1, wobei im Schritt /2//ii/ die folgenden Schritte durchgeführt werden:

- Berechnen von $R_1$ als:

$$R_1 = (f(X_1).f(X_2))^{\frac{q+1}{4}}$$

- wenn $R_1^2$ gleich $f(X_1).f(X_2)$ ist, Entscheiden, dass der Term $f(X_1).f(X_2)$ ein Term im Quadrat im Körper $F_q$ ist; wobei im Schritt /2/- /iii/ gemäß den folgenden Schritten getestet wird, ob der Term $f(X_1)$ ein Term im Quadrat im endlichen Körper $F_q$ ist:

- Berechnen von $R_2$' als:

$$R_2' = f(X_1)^{(q-1)-\frac{q+1}{4}}$$

- Berechnen von $R_3$' als:

$$R_3' = R_2'^{\,2}$$

- Berechnen von $R_4$' als:

$$R_4' = R_3'.f(X_1)$$

wobei, wenn $R_4'$ nicht gleich 1 ist, im Schritt /2/-/iv/ die Quadratwurzel von $f(X_2)$ gemäß der folgenden Gleichung erhalten wird:

$$\sqrt{f(X_2)} = R_1.R_2'$$

**3.** Verfahren zum Ausführen einer kryptografischen Berechnung nach Anspruch 1 oder 2, wobei die Polynome, die die Skalba-Gleichheit erfüllen, in Jacobi-Koordinaten ausgedrückt werden, gemäß denen der Punkt P(X,Y) als P(X', Y', Z) geschrieben wird wie:

$$X' = X.Z^2,$$

$$Y' = Y.Z^3$$

wo die Funktion f als $f_z(X')$ geschrieben wird und Folgendes erfüllt:

$$f_z(X') = X'^3 + a.X'.Z^4 + b.Z^6$$

wobei die elliptische Kurve die folgende Gleichung erfüllt:

$$Y'^2 = f_z(X')$$

in der die Polynome, die die Skalba-Gleichheit erfüllen und in Jacobi-Koordinaten ausgedrückt werden, $X'_1(t)$, $X'_2(t)$, $X'_3(t)$, $Z(t)$ und $U'(t)$ sind und die Skalba-Gleichheit in Jacobi-Koordinaten erfüllen:

$$U'(t)^2 = f_{Z(t)}\big(X_1'(t)\big).f_{Z(t)}\big(X_2'(t)\big).f_{Z(t)}\big(X_3'(t)\big)$$

und in der Z(t) derart bestimmt wird, dass die Inversionsoperationen in Multiplikationsoperationen umgewandelt werden.

**4.** Verfahren zum Ausführen einer kryptografischen Berechnung nach Anspruch 1 oder 2, wobei die Polynome, die die Skalba- Gleichheit erfüllen, derart sind, dass es möglich ist, den Wert von $X_3(t)$ für jedes mögliche t derart festzulegen, dass $f(X_3(t))$ nie ein Term im Quadrat in Fq ist,
und wobei im Schritt /2/- /ii/ der Term $f(X_1).f(X_2)$ kein Term im Quadrat im endlichen Körper $F_q$ ist,
wobei im Schritt /2/- /iii/ gemäß den folgenden Schritten getestet wird, ob der Term $f(X_1)$ ein Term im Quadrat im endlichen Körper $F_q$ ist:

    - Berechnen von $R_2'$ als:

$$R_2' = f(X_1)^{(q-1)-\frac{q+1}{4}}$$

    - Berechnen von $R_3'$ als:

$$R_3' = R_2'^{\,2}$$

- Berechnen von R$_4$' als:

$$R_4' = R_3'.f(X_1)$$

wobei, wenn R$_4$' nicht gleich 1 ist, im Schritt /2/-/iv/ die Quadratwurzel von f(X$_2$) gemäß der folgenden Gleichung erhalten wird:

$$\sqrt{f(X_2)} = R_1.R_2'$$

wo

$$R_1 = \left(f(X_1).f(X_2)\right)^{\frac{q+1}{4}}$$

wobei R$_1$ im Voraus gemäß der folgenden Gleichung erhalten wird:

$$R_1 = \left(f(X).f(X_2)\right)^{\frac{q+1}{4}} = U.f(u)^{(q-1)\frac{q+1}{4}}$$

5. Verfahren zum Ausführen einer kryptografischen Berechnung nach Anspruch 4, wobei die Polynome, die die Skalba-Gleichheit erfüllen, in Jacobi-Koordinaten ausgedrückt werden, gemäß denen der Punkt P(X,Y) als P(X', Y', Z) geschrieben wird wie:

$$X' = X.Z^2,$$

$$Y' = Y.Z^3$$

wo die Funktion f als f$_z$(X') geschrieben wird und Folgendes erfüllt:

$$f_z(X') = X'^3 + a.X'.Z^4 + b.Z^6$$

wobei die elliptische Kurve die folgende Gleichung erfüllt:

$$Y'^2 = f_z(X')$$

in der die Polynome, die die Skalba-Gleichheit erfüllen und in Jacobi-Koordinaten ausgedrückt werden, X'$_1$(t), X'$_2$

22

(t), Z(t) und U'(t) sind und die Skalba-Gleichheit in Jacobi-Koordinaten erfüllen:

$$U'(t)^2 = f_{Z(t)}(X_1'(t)).f_{Z(t)}(X_2'(t)).f\left(X_3(t)\right)$$

und in der Z(t) derart bestimmt wird, dass die Inversionsoperationen in Multiplikationsoperationen umgewandelt werden.

6. Verfahren zum Ausführen einer kryptografischen Berechnung nach einem der vorhergehenden Ansprüche, wobei in Schritt /1/ der Wert des Parameters t in Abhängigkeit von einem Passwort oder einer Kennung erhalten wird.

7. Verfahren zum Ausführen einer kryptografischen Berechnung nach einem der Ansprüche 1 bis 5, wobei die kryptografische Anwendung eine Anwendung zur Authentifizierung oder Identifizierung durch eine Kontrollinstanz ist und wobei im Schritt /1/ die folgenden Schritte ausgeführt werden:

/a/ Erzeugen eines zufälligen Werts;
/b/ Erhalten eines verschlüsselten Werts durch Verschlüsseln des zufälligen Werts auf der Grundlage einer Verschlüsselungsfunktion unter Verwendung eines Verschlüsselungsschlüssels, der ausgehend von einem Passwort oder einer Kennung bestimmt wird, das/die dem Parameter entspricht; und
/c/ Senden des verschlüsselten Werts an die Kontrollinstanz.

8. Elektronische Vorrichtung, die Mittel aufweist, die zum Einsatz eines Verfahrens zum Ausführen einer kryptografischen Berechnung nach einem der Ansprüche 1 bis 7 angepasst sind.

**Claims**

1. Method of execution of a cryptographic calculation in an electronic component comprising a step of obtaining a point P(X,Y) from at least one parameter t, on an elliptical curve satisfying the equation:

$$Y^2 = f(X);$$

and
starting from polynomials $X_1(t)$, $X_2(t)$, $X_3(t)$ and U(t) satisfying the following Skalba equality:

$$f(X_1(t)).f(X_2(t)).f(X_3(t))=U(t)^2$$

in the finite field Fq, regardless of the parameter t, q satisfying the equation q = 3 mod 4;
said method comprising the following steps:

/1/ obtain a value of the parameter t;
/2/ determine the point P by executing the following substeps:

/i/ calculate $X_1= X_1(t)$, $X_2= X_2(t)$, $X_3= X_3(t)$ and U=U(t)
/ii/ if the term $f(X_1).f(X_2)$ is a squared term in the finite field Fq then test whether the term $f(X_3)$ is a squared term in the finite field Fq and calculate the square root of the term $f(X_3)$, point P having $X_3$ as abscissa and the square root of the term $f(X_3)$ as ordinate;
/iii/ otherwise, test whether the term $f(X_1)$ is a squared term in the finite field Fq and in this case, calculate the square root of the term $f(X_1)$, point P having $X_1$ as abscissa and the square root of the term $f(X_1)$ as ordinate;
/iv/ otherwise, calculate the square root of the term $f(X_2)$, point P having $X_2$ as abscissa and the square root of the term $f(X_2)$ as ordinate;

/3/ use said point P in a cryptographic application of encryption or hashing or signature or authentication or identification.

**2.** Method of execution of a cryptographic calculation according to claim 1, in which the following steps are executed at step /2/-/ii/:

- calculate $R_1$ such that:

$$R_1 = (f(X_1).f(X_2))^{\frac{q+1}{4}}$$

- if $R_1^2$ is equal to f $(X_1)$ .f $(X_2)$, then decide that the term f $(X_1)$ .f $(X_2)$ is a squared term in field Fq; in which, at step /2/- /iii/, it is tested whether the term f $(X_1)$ is a squared term in the finite field $F_q$ according to the following steps:
- calculate $R_2$' such that:

$$R_2' = f(X_1)^{q-1-\frac{q+1}{4}}$$

- calculate $R_3$' such that:

$$R_3' = R_2'^2$$

- calculate $R_4$' such that:

$$R_4' = R_3'.f(X_1)$$

in which, if $R_4$' is not equal to 1, at step /2/-/iv/, the square root of f(X_2) is obtained from the following equation:

$$\sqrt{f(X_2)} = R_1.R_2'$$

**3.** Method of execution of a cryptographic calculation according to claim 1 or 2, in which the polynomials that satisfy Skalba's equality are expressed in Jacobian coordinates according to which the point P (X, Y) is written P (X', Y', Z) such that:

$$X' = X .Z^2,$$

$$Y' = Y.Z^3$$

where the function f is written $f_z$ (X') and satisfies:

$$f_Z(\mathrm{X'}) = \mathrm{X'}^3 + a.\mathrm{X'}.\mathrm{Z}^4 + b.\mathrm{Z}^6$$

with the elliptical curve satisfying the equation:

$$Y'^2 = f_Z(\mathrm{X'})$$

in which the polynomials that satisfy Skalba's equality expressed in Jacobian coordinates are $X'_1$ (t), $X'_2$ (t), $X'_3$ (t), Z (t) and U' (t) and satisfy Skalba's equality in Jacobian coordinates:

$$U'(t)^2 = f_{Z(t)}(X'_1(t)).f_{Z(t)}(X'_2(t)).f_{Z(t)}(X'_3(t))$$

and in which Z (t) is determined in such a way that the operations of inversion are transformed into operations of multiplication.

4.   Method of execution of a cryptographic calculation according to claim 1 or 2, in which the polynomials that satisfy Skalba's equality are such that it is possible to set the value of $X_3$ (t) for any possible t, such that f ($X_3$ (t) ) is never a squared term in Fq,
and in which, at step /2/- /ii/, the term f ($X_1$) .f ($X_2$) is not a squared term in the finite field Fq,
in which, at step /2/- /iii/, it is tested whether the term f ($X_1$) is a squared term in the finite field Fq according to the following steps:

- calculate $R_2$' such that:

$$R_2^{'} = f(X_1)^{q-1-\frac{q+1}{4}}$$

- calculate $R_3$' such that:

$$R_3^{'} = R_2^{'2}$$

- calculate $R_4$' such that:

$$R_4^{'} = R_3^{'}.f(X_1)$$

in which, if $R_4$' is not equal to 1, at step /2/-/iv/, the square root of f($X_2$) is obtained from to the following equation:

$$\sqrt{f(X_2)} = R_1.R_2^{'}$$

where

$$R_1 = (f(X_1).f(X_2))^{\frac{q+1}{4}}$$

in which $R_1$ is obtained beforehand from the following equation:

$$R_1 = (f(X).f(X_2))^{\frac{q+1}{4}} = U.f(u)^{q-1-\frac{q+1}{4}}$$

5. Method of execution of a cryptographic calculation according to claim 4, in which the polynomials that satisfy Skalba's equality are expressed in Jacobian coordinates according to which the point P (X, Y) is written P (X', Y', Z) such that:

$$X' = X \; . Z^2,$$

$$Y' = Y.Z^3$$

where the function f is written $f_Z$ (X') and satisfies:

$$f_Z(X') = X'^3 + a.X'.Z^4 + b.Z^6$$

with the elliptical curve satisfying the equation:

$$Y'^2 = f_Z(X')$$

in which the polynomials that satisfy Skalba's equality expressed in Jacobian coordinates are X'$_1$ (t), X'$_2$ (t), Z (t) and U' (t) and satisfy Skalba's equality in Jacobian coordinates:

$$U'(t)^2 = f_{Z(t)}(X'_1(t)).f_{Z(t)}(X'_2(t)).f\;(X_3(t))$$

and in which Z (t) is determined in such a way that the operations of inversion are transformed into operations of multiplication.

6. Method of execution of a cryptographic calculation according to any one of the preceding claims, in which, at step /1/, the value of the parameter t is obtained as a function of a password or an identifier.

7. Method of execution of a cryptographic calculation according to any one of claims 1 to 5, in which the cryptographic application is an application of authentication or identification by a checking entity, and
in which, at step /1/, the following steps are executed:

/a/ generate a random value;
/b/ obtain an encrypted value by encrypting said random value based on an encryption function using an encryption key determined from a password or identifier corresponding to the parameter; and
/c/ transmit the encrypted value to the checking entity.

8. Electronic device comprising means suitable for implementing a method of execution of a cryptographic calculation according to any one of claims 1 to 7.

FIG.1.

$$R_0 = f(X_1) \cdot f(X_2)$$ ——201

$$R = \left( f(X_1) \cdot f(X_2) \right)^{\frac{q+1}{4}}$$ ——202

203 —— $R_1^2 = R_0$ —— N

Y

204 —— $$R = f(X_3)^{q-1-\frac{q+1}{4}}$$         $$R_2' = f(X_1)^{q-1-\frac{q+1}{4}}$$ ——211

205 —— $R_3 = R_2^2$         $R_3' = R_2'^2$ ——212

206 —— $R_4 = R_3 \cdot f(X_3)$         $R_4' = R_3' \times f(X_1)$ ——213

207 —— $R_4 = 1$         $R_4' = 1$ —— 214 —— N

Y         Y

208 —— $R_5 = R_2 \times f(X_3)$     215 —— $R_5' = R_2' \times f(X_1)$         $R_5'' = R_1 \times R_2'$ —— 216

FIG.2.

$$R'_2 = f(X_1)^{q-1-\frac{q+1}{4}}$$ —211

$$R'_3 = R'^2_2$$ —212

$$R'_4 = R'_3 \times f(X_1)$$ —213

214— $R'_4 = 1$ $\quad$ N

Y

215— $R'_5 = R'_2 \times f(X_1)$ $\qquad$ $R''_5 = R_1 \times R'_2$ ← $R_1$

216

FIG.3.